# EUROPÄISCHE PATENTSCHRIFT

(11) **EP 2 669 037 B1**
(45) Veröffentlichungstag und Bekanntmachung des Hinweises auf die Patenterteilung: **11.09.2019**
(21) Anmeldenummer: 12169976.3
(22) Anmeldetag: 30.05.2012
(51) Int. Cl.: B23K 9/073, B23K 9/09, B23K 9/095

(54) **Schweißrauchreduzierung**
Welding fumes reduction
Réduction de fumée de soudage

(43) Veröffentlichungstag der Anmeldung: 04.12.2013
(73) Patentinhaber: EWM AG, 56271 Mündersbach (DE)
(72) Erfinder: Szczesny, Michael, 56271 Mündersbach (DE)
(74) Vertreter: Cohausz & Florack

(56) Entgegenhaltungen:
- EP-A1- 1 582 282
- EP-A1- 1 671 736
- JP-A- 56 168 963
- US-A- 5 281 791
- US-A1- 2012 097 655

## Beschreibung

Gemäß einem ersten Aspekt betrifft die Erfindung ein Lichtbogenschweißgerät mit einer abschmelzenden Elektrode. Dabei umfasst das Lichtbogenschweißgerät Kurzschlussdetektionsmittel.

Gemäß dem ersten Aspekt der Erfindung betrifft diese weiterhin ein Verfahren zum Schweißen mit einem Lichtbogenschweißgerät mit einer abschmelzenden Elektrode bei dem ein Kurzschluss detektiert wird.

Gemäß einem zweiten Aspekt betrifft die Erfindung eine Lichtbogenprozesssteuereinheit für ein Lichtbogenschweißgerät mit einer abschmelzenden Elektrode. Der Lichtbogenprozesssteuereinheit sind Kurzschlussdetektionsmittel zugeordnet.

Gemäß dem zweiten Aspekt der Erfindung betrifft diese weiterhin ein Verfahren zum Schweißen mit einem Lichtbogenschweißgerät mit einer abschmelzenden Elektrode, bei dem ein Kurzschluss detektiert wird.

Der Einfachheit halber werden hier stets das Lichtbogenschweißen und das Lichtbogenlöten unter der Bezeichnung Lichtbogenschweißen zusammengefasst. Entsprechend wird unter einem Lichtbogenschweißgerät auch ein Gerät zum Lichtbogenlöten verstanden.

Es existieren zahlreiche verschiedene Lichtbogenschweißverfahren. Einige von ihnen arbeiten mit einer abschmelzenden Elektrode. Zu diesen Lichtbogenschweißverfahren zählt insbesondere das Metallschutzgasschweißen (MSG-Schweißen). MSG-Schweißverfahren zeichnen sich dadurch aus, dass der Lichtbogen zwischen einer abschmelzenden Elektrode, die gleichzeitig einen Schweißzusatz darstellt, und dem in Bearbeitung befindlichen Werkstück brennt. Beim MSG-Schweißen kann die abschmelzende Elektrode durch einen Draht gebildet werden, dessen Vorschub automatisch durch eine Drahtfördervorrichtung erfolgt. Das Schutzgas bewirkt beim MSG-Schweißen die Abschirmung der abschmelzenden Elektrode, des Lichtbogens und des Schweißbads gegen die Atmosphäre. MSG-Schweißverfahren sind mit dem Metall-Inertgasschweißen (MIG-Schweißen) und dem Metall-Aktivgasschweißen (MAG-Schweißen) in zwei grundlegende Verfahrensarten untergliederbar. Das MSG-Schweißen gilt als besonders wirtschaftlich.

Beim Lichtbogenschweißen mit abschmelzender Elektrode, insbesondere beim MSG-Schweißen, entstehen einerseits Strahlung und Dämpfe, die durch das Verdampfen des Materials der abschmelzenden Elektrode und/oder des bearbeiteten Werkstücks erzeugt werden. Sie werden als Emissionen bezeichnet. Daneben entstehen partikelförmige Schadstoffe, insbesondere Metalloxide, die als Schweißrauche bezeichnet werden. Schweißrauche und Emissionen sind umweltschädlich und gesundheitsschädlich. Sie sollten daher so gering wie möglich gehalten werden.

Beim Lichtbogenschweißen mit abschmelzender Elektrode existieren mehrere Prozessarten. Sie unterscheiden sich hinsichtlich ihrer Eignung für verschiedene Schweißaufgaben und hinsichtlich des Emissionsverhaltens und der Schweißrauchbildung.

Bei geringen Schweißstromstärken stellt sich der sogenannte Kurzlichtbogen ein. Beim Kurzlichtbogenprozess geht der Werkstoff ausschließlich im Kurzschluss über, wenn der Tropfen durch die kontinuierliche Drahtzufuhr und durch das Tropfenwachstum die Schmelzbadoberfläche berührt. Dabei verlischt der Lichtbogen und zündet wieder, wenn der Tropfen in Folge des hohen Kurzschlussstromes abgeschnürt ist. Nachteilig beim Kurzlichtbogenprozess ist die verstärkte Neigung zur Spritzerbildung. Dies führt zu einer vergleichsweise starken Schweißrauchbildung.

Bei einer Erhöhung des Schweißstromes tritt ab einer kritischen Stromstärke der kurzschlussfreie Werkstoffübergang auf. Die kritische Stromstärke ist vom Material und vom Durchmesser der abschmelzenden Elektrode abhängig. In einem Übergangslichtbogenbereich, dem sogenannten Mischlichtbogen, geht dennoch der Tropfen teilweise im Kurzschluss über. In diesem Fall erfolgt der Werkstoffübergang in groben Tropfen.

Bei einer weiteren Erhöhung des Stromes über die kritische Stromstärke hinaus ergeben sich eine Erhöhung der Tropfenfrequenz und gleichzeitig eine deutliche Abnahme der Tropfengrößen.

Durch eine weitere Erhöhung des Schweißstromes erreicht man den Bereich des sogenannten Sprühlichtbogens, welcher durch einen völlig kurzschlussfreien und feintröpfigen Werkstoffübergang gekennzeichnet ist. Mit dem Sprühlichtbogen stellt sich im Strom- und Spannungsverlauf ein zeitlich sehr gleichmäßiger Schweißprozess ein. Für die Tropfenablösung im Sprühlichtbogen ist in erster Linie der sogenannte Pincheffekt verantwortlich, bei dem eine Einschnürung des Tropfens in Folge der Lorenzkraft erfolgt. Im Bereich des Sprühlichtbogens erfolgt also während der gesamten Zeit stets ein feintröpfiger Werkstoffübergang. Das Schweißen im Bereich des Sprühlichtbogens ist jedoch nicht für jede Schweißaufgabe geeignet. Insbesondere kann es ungeeignet sein, wenn vergleichsweise dünne Werkstückabschnitte zusammengefügt werden sollen und es können Schwierigkeiten beim Schweißen in Zwangslagen auftreten.

Aus diesen Gründen existiert ein weiterer Schweißprozess, der als Pulsschweißprozess oder kurz als Pulsschweißen bezeichnet wird, und für die obigen Schweißaufgaben besser geeignet ist. Wie in der US-A-2012/097655 beschrieben folgt beim Pulsschweißen auf eine Pulsstromphase, in der die kritische Stromstärke überschritten wird und die zum Einleiten des Ablösens eines Werkstofftropfens dient, eine Grundstromphase, die gegenüber der Pulsstromphase durch eine verringerte Lichtbogenstromstärke gekennzeichnet ist. Die in der Grundstromphase herrschende Grundstromstärke dient in erster Linie der Aufrechterhaltung des Lichtbogens. In der Regel beinhaltet ein Pulsschweißprozess eine Vielzahl von Pulstromphasen und Grundstromphasen, wobei sich Pulsstromphasen und die Grundstromphasen abwechseln.

Es ist zu erwarten, dass hinsichtlich aller dieser Schweißprozesse die Vorschriften des Arbeits- und Umweltschutzes bezüglich Emissionen und Schweißrauchentwicklung strenger werden und Anwender verstärkt auf diesen Aspekt achten.
Daher ist es eine Aufgabe der Erfindung, Verbesserungen des Schweißens mit einem Lichtbogenschweißgerät mit abschmelzender Elektrode hinsichtlich der Emissionen und der Schweißrauchentwicklung zu ermöglichen.

Bei einem Lichtbogenschweißgerät gemäß dem ersten Aspekt der Erfindung wird diese Aufgabe dadurch gelöst, dass das Lichtbogenschweißgerät eingerichtet ist, einen Pulsschweißprozess durchzuführen, und dass das Lichtbogenschweißgerät Anzeigemittel umfasst, die eingerichtet sind, einen von den Kurzschlussdetektionsmitteln detektierten Kurzschluss anzuzeigen, wobei die Anzeigemittel eingerichtet sind, einen von den Kurzschlussdetektionsmitteln detektierten Kurzschluss nur anzuzeigen, wenn dem detektierten Kurzschluss während des durchgeführten Schweißprozesses eine festgelegte Anzahl von detektierten Kurzschlüssen vorangegangen ist.

Bei einem Verfahren gemäß dem ersten Aspekt der Erfindung wird diese Aufgabe entsprechend dadurch gelöst, dass das Lichtbogenschweißgerät im Pulsschweißprozess betrieben wird und dass der detektierte Kurzschluss angezeigt wird, wobei ein detektierter Kurzschluss nur angezeigt wird, wenn dem detektierten Kurzschluss während des durchgeführten Schweißprozesses eine festgelegte Anzahl von detektierten Kurzschlüssen vorangegangen ist.

Bei einer Lichtbogenprozesssteuereinheit gemäß dem zweiten Aspekt der Erfindung wird die obige Aufgabe dadurch gelöst, dass die Lichtbogenprozesssteuereinheit eingerichtet ist, bei der Detektion eines Kurzschlusses durch die Kurzschlussdetektionsmittel durch Beeinflussung eines Schweißprozessparameters eine Kurzschlussvermeidung nur zu bewirken, wenn dem detektierten Kurzschluss während des Pulsschweißprozesses eine festgelegte Anzahl von detektierten Kurzschlüssen vorangegangen ist.

Bei einem Verfahren gemäß dem zweiten Aspekt der Erfindung wird diese Aufgabe entsprechend dadurch gelöst, dass bei der Detektion eines Kurzschlusses durch Beeinflussung eines Schweißprozessparameters eine Kurzschlussvermeidung nur bewirkt wird, wenn dem detektierten Kurzschluss während des Pulsschweißprozesses eine festgelegte Anzahl von detektierten Kurzschlüssen vorangegangen ist.

Die folgenden Erläuterungen der Lösung gemäß dem ersten Aspekt der Erfindung beziehen sich sowohl auf das erfindungsgemäße Lichtbogenschweißgerät als auch auf das erfindungsgemäße Verfahren. Der Übersichtlichkeit halber wird jedoch schwerpunktmäßig auf das erfindungsgemäße Lichtbogenschweißgerät eingegangen, wobei die Erläuterungen für das erfindungsgemäße Verfahren sinngemäß ebenso gelten.

Neueste Untersuchungen (s. Rose) legen nahe, dass bei der Beurteilung der Gesundheits- und Umweltgefährdung durch Schweißrauche die Partikelgröße von Bedeutung ist. Von Partikeln geringerer Größe (z.B. Partikeln mit einem Durchmesser d im Nano-Bereich um ca. 100 nm, d.h. Partikel für die gilt 80 nm ≤ d ≥ 120 nm, insbesondere 90 nm ≤ d ≥ 110 nm, speziell 95 nm ≤ d ≥ 105 nm) geht - auch wenn ihre Masse kleiner ist - eine stärkere Gesundheitsgefährdung aus als von größeren Partikeln (beispielsweise mit einem Durchmesser in einem Bereich um ca. 10 µm). Als Ursache hierfür wird die insgesamt größere Oberfläche vieler kleiner Partikel im Vergleich zu einem großen Partikel gleicher Masse vermutet.

Selbst bei an sich weitgehend kurzschlussfreien Schweißprozessen, wie dem Pulsschweißen, können vereinzelt Kurzschlüsse auftreten. Dies kann etwa passieren, wenn die gewählten Parameter des Schweißprozesses nicht optimal sind, so dass beispielsweise die abschmelzende Elektrode nicht schnell genug erhitzt wird und bei Förderung in Richtung des Werkstücks sie selbst oder ein Werkstofftropfen dieses irgendwann berührt. Der Erfindung liegt die Erkenntnis zugrunde, dass die besonders schädlichen Partikel im Nano-Bereich insbesondere entstehen, wenn Kurzschlüsse aufgelöst werden. Wenn Kurzschlüsse in großer Zahl auftreten und aufgelöst werden, entstehen somit in großer Menge Partikel im Nano-Bereich.

Tritt während eines Schweißprozesses, der mit einem Lichtbogenschweißgerät gemäß dem ersten Aspekt der Erfindung durchgeführt wird, einen Kurzschluss zwischen der abschmelzenden Elektrode und einem Werkstück auf, kann dieser von den Kurzschlussdetektionsmitteln detektiert werden. Die Anzeigemittel zeigen dann an, dass ein Kurzschluss detektiert wurde. Auf diese Weise wird ein Bediener des erfindungsgemäßen Lichtbogenschweißgeräts über das Auftreten von Kurzschlüssen in Kenntnis gesetzt.

Das Anzeigen detektierter Kurzschlüsse verschafft dem Bediener die Möglichkeit, auf das Auftreten von Kurzschlüssen zu reagieren. Eine Möglichkeit für den Bediener, auf die Anzeige von Kurzschlüssen zu reagieren, liegt in der Veränderung eines geeigneten Schweißprozessparameters. Zum Beispiel kann er durch Veränderung von zumindest einem der Parameter Lichtbogenstromstärke, Lichtbogenspannung oder Drahtfördergeschwindigkeit über die Vornahme einer entsprechenden Einstellung am Lichtbogenschweißgerät durch eine Parameteroptimierung zukünftige Kurzschlüsse vermeiden. Beispielsweise kann die Lichtbogenstromstärke und/oder die Lichtbogenspannung erhöht werden, um so den Energieeintrag in die abschmelzende Elektrode zu steigern. Dadurch kann die Lichtbogenlänge vergrößert werden, so dass eine Kurzschlussvermeidung bewirkt wird. Durch die Verminderung der Drahtfördergeschwindigkeit kann der Abstand zwischen der Spitze der abschmelzenden Elektrode und dem Werkstück und damit die Lichtbogenlänge vergrößert werden.

Kurzschlussvermeidung bedeutet in diesem Zusammenhang nicht, dass als Ergebnis der Kurzschlussvermeidung während des Schweißprozesses überhaupt keine Kurzschlüsse mehr auftreten dürfen. Es reicht aus, wenn im Mittel, z.B. bei einem Pulsschweißprozess im Mittel über eine Vielzahl von Pulsen, Kurzschlüsse deutlich seltener auftreten, so dass insbesondere Kurzschlüsse nur noch vereinzelt zu beobachten sind. Dadurch kann die Menge der entstehenden Schadstoffpartikel, d.h. die Schweißrauchentwicklung, reduziert werden. Insbesondere erfolgt eine Reduktion der besonders schädlichen Partikel im Nano-Bereich.

Gemäß beider Aspekte der Erfindung können die Kurzschlussdetektionsmittel unterschiedlich ausgestaltet sein. Sie können z.B. Spannungsmessmittel umfassen. Beispielsweise können sie ein digitales Spannungsmessgerät beinhalten, das die Spannung zwischen der abschmelzenden Elektrode und dem Werkstück hochohmig abgreift und über einen Analog-Digital-Umsetzer in ein digitales Signal umwandelt. Dieses Signal kann dann zum Beispiel mittels eines digitalen Signalprozessors (digital signal processor - DSP), eines Field Programmable Gate Array (FPGA) oder einer anwendungsspezifischen integrierten Schaltung (application specific integrated circuit - ASIC) ausgewertet werden. Die Signalverarbeitung kann auch über eine Software vorgenommen werden, die auf einem Prozessor ausgeführt wird, der neben der Kurzschlussdetektion noch für weitere Aufgaben, eingesetzt wird. Dabei kann es sich z.B. um eine Lichtbogenprozesssteuereinheit handeln. Bei einem Kurzschluss zwischen der abschmelzenden Elektrode und einem Werkstück bricht die dazwischen anliegende Spannung ein. Dieser Einbruch wird von den Kurzschlussdetektionsmitteln detektiert. Das Vorliegen eines Kurzschlusses kann beispielsweise angenommen werden, wenn die Spannung einen bestimmten unteren Schwellwert erreicht oder unterschritten hat.

Ebenso können die Kurzschlussdetektionsmittel Stromstärkenmessmittel umfassen. Bei einem Kurzschluss zwischen der abschmelzenden Elektrode und einem Werkstück steigt die Lichtbogenstromstärke rapide an. Dieser Anstiegt kann von den Kurzschlussdetektionsmitteln detektiert werden. Das Vorliegen eines Kurzschlusses kann angenommen werden, wenn die Lichtbogenstromstärke einen bestimmt oberen Schwellwert erreicht oder überschritten hat.

Das Lichtbogenschweißgerät gemäß dem ersten Aspekt der Erfindung ist erfindungsgemäß eingerichtet, einen Pulsschweißprozess durchzuführen. Die Lichtbogenprozesssteuereinheit gemäß dem zweiten Aspekt ist erfindungsgemäß eingerichtet, die Lichtbogenstromstärke dahingehend zu steuern, dass ein Pulsschweißprozess durchgeführt wird.

Untersuchungen (z.B. S.Rose: "Entstehung und Reduzierung der Schweißrauchemissionen beim MSG-Schweißen - Ergebnisse des 1. EWM-Awards", DVS) haben gezeigt, dass sich der Pulsschweißprozess bereits durch vergleichsweise geringe Emissionen und Schweißrauchentwicklung auszeichnet. Wird also die Erfindung im Kontext des Pulsschweißens eingesetzt, kann ein Schweißprozess ermöglicht werden, der besonders arm an Emissionen und Schweißrauchentwicklung ist.

Erfindungsgemäß sind die Anzeigemittel eingerichtet, einen von den Kurzschlussdetektionsmitteln detektierten Kurzschluss nur anzuzeigen, wenn dem detektierten Kurzschluss während des Schweißprozesses eine festgelegte Anzahl von detektierten Kurzschlüssen vorangegangen ist.

Während eines Schweißprozesses ist das Auftreten einzelner Kurzschlüsse nahezu unvermeidbar. Es kann daher wünschenswert sein, den Schweißer mittels der Anzeigemittel nur auf einen detektierten Kurzschluss aufmerksam zu machen, wenn ihm während des Schweißprozesses eine festgelegte Anzahl von detektierten Kurzschlüssen vorangegangen ist. So kann erreicht werden, dass der Schweißer nur zu einer Schweißparameteränderung animiert wird, wenn eine gewisse Anzahl von Kurzschlüssen überschritten wurde, nämlich zumindest ein Kurzschluss mehr als die festgelegte Anzahl von Kurzschlüssen aufgetreten ist. Bis einschließlich dieser festgelegten Anzahl von Kurzschlüssen wird davon ausgegangen, dass es sich um vereinzelte Kurzschlüsse handelt, die nicht auf eine ungeeignete Parametrierung hindeuten. Es kann aber auch jeder detektierte Kurzschluss angezeigt und dem Schweißer die Entscheidung überlassen werden, ab wann er eine Reaktion für notwendig hält.

Im Rahmen dieses Ausführungsbeispiels kann vorgesehen sein, dass die Anzeigemittel eingerichtet sind, einen von den Kurzschlussdetektionsmitteln detektierten Kurzschluss nur anzuzeigen, wenn dem detektierten Kurzschluss während des Schweißprozesses eine festgelegte Anzahl von detektierten Kurzschlüssen in einem festgelegten Zeitraum vorangegangen ist. Beim Pulsschweißen kann der Zeitraum in Form einer Anzahl von Pulsen vorgegeben sein. Auf diesem Weg kann Kurzschlussanzeige in Beziehung zu der Dauer des Schweißprozesses gesetzt werden und so ein verbessertes Kriterium für die Kurzschlussanzeige erhalten werden.

Wenn hier also von der Anzeige eines detektierten Kurzschlusses die Rede ist, schließt dies die Variante, dass eine solche Anzeige nur erfolgt, wenn dem jeweiligen detektierten Kurzschluss während des Schweißprozesses eine festgelegte Anzahl von detektierten Kurzschlüssen vorangegangen ist, mit ein.

Gemäß dem ersten Aspekt der Erfindung können die Anzeigemittel auf vielfältige Weise ausgestaltet sein. Zum Beispiel können sie für die optische Anzeige ausgelegt sein. Die Anzeigemittel können zum Beispiel einen Bildschirm umfassen. Denkbar ist unter anderem der Einsatz einer Flüssigkristallanzeige (liquid chrystal display - LCD) oder eines mittels Leuchtdioden (light-emitting diodes - LED) aufgebauten Bildschirms. Alternativ können sie auch eine oder mehrere Leuchtmittel umfassen, die aufleuchten bzw. erlöschen, wenn ein Kurzschluss detektiert worden ist. Die Anzeigemittel können z.B. an einem Schweißbrenner oder einem versorgungsspannungsgespeisten Leistungsteil des Lichtbogenschweißgeräts angeordnet sein. Sie können mit den Kurzschlussdetektionsmitteln in Verbindung stehen und von diesen zur Kurzschlussanzeige entsprechend angesteuert werden.

Gemäß einem Ausführungsbeispiel sind die Anzeigemittel eingerichtet, einen detektierten Kurzschluss akustisch anzuzeigen.

Gegenüber Anzeigemitteln, die eingerichtet sind, einen detektierten Kurzschluss optisch anzuzeigen, kann dies den Vorteil haben, dass ein Bediener seinen Blick nicht auf die Anzeigemittel richten muss, um über einen detektierten Kurzschluss informiert zu werden. Dadurch kann er seine volle Aufmerksamkeit der Schweißarbeit widmen.

Die Anzeigemittel können in diesem Fall einen Lautsprecher und einen für dessen Ansteuerung geeigneten Signalgenerator enthalten. Auf einen Lautsprecher kann verzichtet werden, wenn durch Modulation der Lichtbogenstromstärke der Lichtbogen selbst zur Schallerzeugung verwendet wird. Dazu kann der Signalgenerator eingerichtet sein, dem Lichtbogenstrom ein entsprechendes Signal zu überlagern. Eine detaillierte Beschreibung dieser Vorgehensweise findet sich in der EP 2 199 004 A1 auf die hier ausdrücklich Bezug genommen wird.

Gemäß einem Ausführungsbeispiel sind die Anzeigemittel eingerichtet, einen detektierten Kurzschluss taktil anzuzeigen. Dies kann einerseits wie bei der akustischen Anzeige den Vorteil haben, dass der Bediener seinen Blick nicht auf die Anzeigemittel richten muss. Bei der akustischen Kurzschlussanzeige kann es jedoch vorkommen, dass ein Bediener diese nicht wahrnimmt, weil beim Lichtbogenschweißen - insbesondere beim Pulsschweißen - oft erheblicher Lärm entsteht. Die taktile Wahrnehmung des Bedieners wird durch diesen Lärm nicht beeinträchtigt.

Für die taktile Kurzschlussanzeige können die Anzeigemittel z.B. ein bewegliches Element umfassen, welches in unmittelbarer Nähe zu einem Brennertaster eines Schweißbrenners des Lichtbogenschweißgeräts angeordnet ist. Ferner können die Anzeigemittel einen Aktuator umfassen, der bei entsprechender Ansteuerung das bewegliche Element bewegt. Dieses kann daraufhin gegen die Hand eines Bedieners gedrückt werden, der den Schweißbrenner hält, und ihn so auf den detektierten Kurzschluss aufmerksam machen.

Die folgenden Erläuterungen der Lösung gemäß dem zweiten Aspekt der Erfindung beziehen sich sowohl auf die erfindungsgemäße Lichtbogenprozesssteuereinheit als auch auf das erfindungsgemäße Verfahren. Der Übersichtlichkeit halber wird jedoch schwerpunktmäßig auf die erfindungsgemäße Lichtbogenprozesssteuereinheit eingegangen, wobei die Erläuterungen für das erfindungsgemäße Verfahren sinngemäß ebenso gelten.

Tritt während eines Schweißprozesses, der mit einem Lichtbogenschweißgerät mit einer Lichtbogenprozesssteuereinheit gemäß dem zweiten Aspekt der Erfindung durchgeführt wird, ein Kurzschluss zwischen der abschmelzenden Elektrode und einem Werkstück auf, kann dieser von den Kurzschlussdetektionsmitteln detektiert werden. Aufgrund ihrer entsprechenden Einrichtung kann die Lichtbogenprozesssteuereinheit hierauf reagieren, indem sie durch Beeinflussung eines Schweißprozessparameters - oder auch mehrerer Schweißparameter - eine Kurzschlussvermeidung bewirkt. Die Beeinflussung eines Schweißprozessparameters kann zu einer verbesserten Parametrierung führen, die das Auftreten von Kurzschlüssen zwischen der abschmelzenden Elektrode und einem Werkstück unwahrscheinlicher macht. Kurzschlussvermeidung bedeutet wie auch im Kontext des ersten Aspekts der Erfindung eine Reduzierung des Auftretens von Kurzschlüssen im Mittel über die Dauer des Schweißprozesses, so dass insbesondere Kurzschlüsse nur noch vereinzelt zu beobachten sind. Somit kann wie beim ersten Aspekt auch gemäß dem zweiten Aspekt der Erfindung die Anzahl der entstehenden Schadstoffpartikel, d.h. die Schweißrauchentwicklung, reduziert werden. Auch hier erfolgt insbesondere eine Reduktion der besonders schädlichen Partikel im Nano-Bereich. Im Unterschied zu der Lösung gemäß dem ersten Aspekt der Erfindung ergibt sich die Reduzierung der Schweißrauchentwicklung nun aber automatisch: Die Kurzschlussvermeidung wird auf dem Weg der Einflussnahme auf einen Schweißprozessparameter ohne Zutun des Bedieners durch die Lichtbogenprozesssteuereinheit herbeigeführt. Es wird nicht lediglich durch eine Kurzschlussanzeige dem Bediener die Möglichkeit eingeräumt, durch eine geeignete Reaktion eine Kurzschlussvermeidung zu bewirken.

Unter einem Schweißprozessparameter wird hier jeder Parameter verstanden, der in Zusammenhang mit einem Schweißprozess steht, der mit einem Lichtbogenschweißgerät, in dem die erfindungsgemäße Lichtbogenprozesssteuereinheit verbaut ist, durchführbar ist. Dazu zählen beispielsweise die Lichtbogenstromstärke, die Lichtbogenspannung oder die Drahtfördergeschwindigkeit.

Die Lichtbogenprozesssteuereinheit unterliegt keinerlei Beschränkungen bezüglich der Komponenten, aus denen sie besteht. So kann sie beispielsweise einen Mikroprozessor umfassen, der die nötigen Steueroperationen vornimmt und dazu auf einen Speicher, beispielsweise einen Flash-Speicher, zurückgreift, in dem die genaue Art und Reihenfolge der auszuführenden Steueroperationen hinterlegt ist. Für das Speichern von Programmanweisungen und Operanden kann dem Mikroprozessor ein Speicher mit wahlfreiem Zugriff(random-access memory - RAM) zugeordnet sein. Alternativ zum Einsatz eines Mikroprozessors sind der Einsatz eines DSP, eines ASIC, eines FPGA oder beliebige andere Lösungen denkbar.

Die erfindungsgemäße Lichtbogenprozesssteuereinheit kann der Steuerung eines jeden Schweißprozessparameters dienen. Dazu kann die Lichtbogenprozessteuereinheit mit einer Komponente verbunden sein, die einen Einfluss auf den jeweiligen Schweißprozessparameter hat. Für die Beeinflussung einer Lichtbogenstromstärke oder einer Lichtbogenspannung kann sie z.B. mit einem versorgungsspannungsgespeisten Leistungsteil verbunden sein. Für die Beeinflussung einer Drahtfördergeschwindigkeit kann sie mit einer Drahtfördervorrichtung verbunden sein etc. Wenn hier vom Steuern eines Schweißprozessparameters die Rede ist, ist stets auch die Regelung des Schweißprozessparameters von diesem Begriff umfasst. Zu diesem Zweck kann die Lichtbogenprozesssteuereinheit Messmittel zur Erfassung von Schweißprozessparametern beinhalten, so dass das Überwachen des Prozesses möglich wird. Beispielsweise kann die Lichtbogenprozesssteuereinheit mit der Fähigkeit zu Regelung des Lichtbogenstroms ausgestattet sein. Eine erfindungsgemäße Lichtbogenprozesssteuereinheit kann gegebenenfalls die Lichtbogenstromstärke auch nur indirekt steuern, in dem sie unmittelbar zunächst eine mit der Lichtbogenstromstärke in Zusammenhang stehende Größe steuert. Beispielsweise kann diese mit der Lichtbogenstromstärke in Zusammenhang stehende Größe die Spannung sein, die zwischen abschmelzender Elektrode und dem zu bearbeitenden Werkstück anliegt.

Eine mögliche Einrichtung der Lichtbogenprozesssteuereinheit, die Lichtbogenstromstärke dahingehend zu steuern, dass ein Pulsschweißprozess durchgeführt wird, kann z.B. erfolgen, indem ein in einem Speicher hinterlegtes Steuerprogramm vorgesehen ist, auf welches zur Steuerung der Lichtbogenstromstärke von einem Prozessor zugegriffen wird. Das Steuerprogramm kann Instruktionen umfassen, die bewirken, dass die Lichtbogenprozesssteuereinheit über den Prozessor Steuersignale an ein versorgungsspannungsgespeiste Leistungsteil ausgibt, in Folge derer sich ein Verlauf der Lichtbogenstromstärke, wie er für das Pulsschweißen benötigt wird, einstellt.

Die Einrichtung der Lichtbogenprozesssteuereinheit dahingehend, dass sie bei der Detektion eines Kurzschlusses durch die Kurzschlussdetektionsmittel durch Beeinflussung eines Schweißprozessparameters eine Kurzschlussvermeidung bewirken kann, kann auf ähnliche Weise erfolgen. So können beispielsweise Vorgaben existieren, die besagen, in welcher Weise die Beeinflussung erfolgen soll. Diese Vorgaben können in einem Speicher der Lichtbogenprozesssteuereinheit hinterlegt sein.

Erfindungsgemäß ist die Lichtbogenprozesssteuereinheit eingerichtet, bei der Detektion eines Kurzschlusses durch die Kurzschlussdetektionsmittel durch Beeinflussung eines Schweißprozessparameters eine Kurzschlussvermeidung nur zu bewirken, wenn dem detektierten Kurzschluss während des Schweißprozesses eine festgelegte Anzahl von detektierten Kurzschlüssen vorangegangen ist.

Während eines Schweißprozesses ist das Auftreten einzelner Kurzschlüsse nahezu unvermeidbar. Es kann daher wünschenswert sein, eine Beeinflussung eines Schweißprozessparameters nur vorzunehmen, wenn einem detektierten Kurzschluss während des Schweißprozesses eine festgelegte Anzahl von detektierten Kurzschlüssen vorangegangen ist, d.h. zumindest ein Kurzschluss mehr als die festgelegte Anzahl von Kurzschlüssen aufgetreten ist. Bis einschließlich dieser festgelegten Anzahl von detektierten Kurzschlüssen wird davon ausgegangen, dass es sich um vereinzelte Kurzschlüsse handelt, die nicht auf eine ungeeignete Parametrierung hindeuten.

Im Rahmen dieses Ausführungsbeispiels kann vorgesehen sein, dass die Lichtbogenprozesssteuereinheit eingerichtet ist, bei der Detektion eines Kurzschlusses durch die Kurzschlussdetektionsmittel durch Beeinflussung eines Schweißprozessparameters eine Kurzschlussvermeidung nur zu bewirken, wenn dem detektierten Kurzschluss während des Schweißprozesses eine festgelegte Anzahl von detektierten Kurzschlüssen in einem festgelegten Zeitraum vorangegangen ist. Beim Pulsschweißen kann die Dauer in Form einer Anzahl von Pulsen vorgegeben sein. Auf diesem Weg kann die Beeinflussung eines Schweißprozessparameters in Beziehung zu der Dauer des Schweißprozesses gesetzt werden und so ein verbessertes Kriterium für die Beeinflussung eines Schweißprozessparameters erhalten werden.
Gemäß einem Ausführungsbeispiel umfasst die Beeinflussung eines Schweißprozessparameters eine Erhöhung der Lichtbogenspannung und/oder der Lichtbogenstromstärke. Insbesondere kann die Beeinflussung eines Schweißprozessparameters in einer Erhöhung der Lichtbogenspannung und/oder der Lichtbogenstromstärke bestehen. Durch die Erhöhung der Lichtbogenspannung und/oder der Lichtbogenstromstärke kann der Energieeintrag in die abschmelzende Elektrode gesteigert werden. Die Lichtbogenlänge kann sich somit vergrößern, so dass es zu einer Kurzschlussvermeidung kommt.

Gemäß einem Ausführungsbeispiel umfasst die Beeinflussung eines Schweißprozessparameters eine Verminderung einer Fördergeschwindigkeit der abschmelzenden Elektrode. Insbesondere kann die Beeinflussung eines Schweißprozessparameters in einer Verminderung einer Fördergeschwindigkeit der abschmelzenden Elektrode bestehen. Die Verminderung einer Fördergeschwindigkeit der abschmelzenden Elektrode kann bis hin zur zeitweiligen Umkehr der Förderrichtung, d.h. einer Fördergeschwindigkeit mit umgekehrtem Vorzeichen, gehen. Durch die Verminderung der Fördergeschwindigkeit kann der Abstand von der Spitze der abschmelzenden Elektrode zum Werkstück vergrößert werden, so dass ein Werkstoffübergang im Kurzschluss vermieden werden kann.

Gemäß einem Ausführungsbeispiel ist der Lichtbogenprozesssteuereinheit ein Bedienmittel zugeordnet, z.B. eine Taste, mittels dessen das Verhalten der Lichtbogenprozesssteuereinheit, bei der Detektion eines Kurzschlusses durch die Kurzschlussdetektionsmittel durch Beeinflussung eines Schweißprozessparameters eine Kurzschlussvermeidung zu bewirken, aus- bzw. wieder zuschaltbar ist. Eine Ausschaltmöglichkeit dieser Option könnte von Schweißern, die fordern, dass während der Arbeit mit einem Schweißgerät die von ihnen eingestellte Parametrierung stets beibehalten wird, gewünscht werden. Die Beeinflussung des Schweißprozessparameters kann zur Folge haben, dass anschließend eine bestimmte Schweißaufgabe nicht mehr mit ausreichender Qualität durchgeführt werden kann. Zum Beispiel kann sich, wenn etwa die Beeinflussung des Schweißprozessparameters in einer Erhöhung der Lichtbogenspannung und/oder der Lichtbogenstromstärke besteht, eine größere Lichtbogenlänge einstellen. Bestimmte Schweißaufgaben erfordern jedoch einen kurzschlussbehafteten Werkstoffübergang mit einem kurzen Lichtbogen. Hier kann das ausschalten der Beeinflussung eines Schweißprozessparameters zur Kurzschlussvermeidung erforderlich sein.

Gemäß einem Ausführungsbeispiel ist die Lichtbogenprozesssteuereinheit eingerichtet, den Schweißprozessparameter zu verändern, bis hinsichtlich des Auftretens von Kurzschlüssen ein vorgegebenes Qualitätskriterium eingehalten ist.

Auf diese Weise kann eine iterative Parameteroptimierung ermöglicht werden, die eine sukzessive Verbesserung der Parametrierung des Schweißprozesses bewirken kann.

Die Veränderung des Schweißprozessparameters oder der Schweißprozessparameter kann dabei schrittweise jeweils nach der Detektion einer bestimmten Anzahl von Kurzschlüssen durch die Kurzschlussdetektionsmittel erfolgen. Das vorgegebene Qualitätskriterium kann in einem Speicher der Lichtbogenprozesssteuereinheit hinterlegt sein.

Es kann z.B. in einer Anzahl an Impulsen eines Pulsschweißprozesses oder einem Zeitraum bestehen, der durchlaufen werden muss, ohne dass es zu einem Kurzschluss kommt. Die Parameterveränderung kann ausbleiben, wenn die vorgegebene Impulsanzahl oder der vorgegebene Zeitraum ohne Kurzschluss erreicht oder überschritten wurde. Detektieren die Kurzschlussdetektionsmittel dagegen zuvor einen Kurzschluss oder eine bestimmte Anzahl von Kurzschlüssen, kann eine Parameterveränderung erfolgen und das Zählen der Impulse bzw. das Messen der Zeitdauer ohne Kurzschluss kann von vorn beginnen.

Es sei angemerkt, dass ein Lichtbogenschweißgerät sowohl Anzeigemittel umfassen kann, die eingerichtet sind, einen von Kurzschlussdetektionsmitteln detektierten Kurzschluss anzuzeigen, als auch eine Lichtbogenprozesssteuereinheit aufweisen kann, die eingerichtet ist, bei der Detektion eines Kurzschlusses durch die Kurzschlussdetektionsmittel durch Beeinflussung eines Schweißprozessparameters eine Kurzschlussvermeidung zu bewirken.

Die Erfindung wird im Folgenden anhand von drei Figuren näher erläutert:
Dabei zeigen
- Fig. 1: eine schematische Darstellung eines Ausführungsbeispiels eines erfindungsgemäßen Lichtbogenschweißgeräts gemäß dem ersten Aspekt der Erfindung in Form eines Blockschaltbilds;
- Fig. 2: eine schematische Darstellung eines Ausführungsbeispiels eines Lichtbogenschweißgeräts, das eine Lichtbogenprozesssteuereinheit gemäß dem zweiten Aspekt der Erfindung umfasst, in Form eines Blockschaltbilds;
- Fig. 3: eine schematische Gegenüberstellung des zeitlichen Verlauf des Werkstoffübergangs, der mittleren Lichtbogenspannung, der Lichtbogenspannung sowie des Lichtbogenstroms, wie sie sich bei dem Einsatz des Lichtbogenschweißgeräts aus Fig. 2 oder auch bei dem Einsatz des Lichtbogenschweißgeräts aus Fig. 1 ergeben kann.

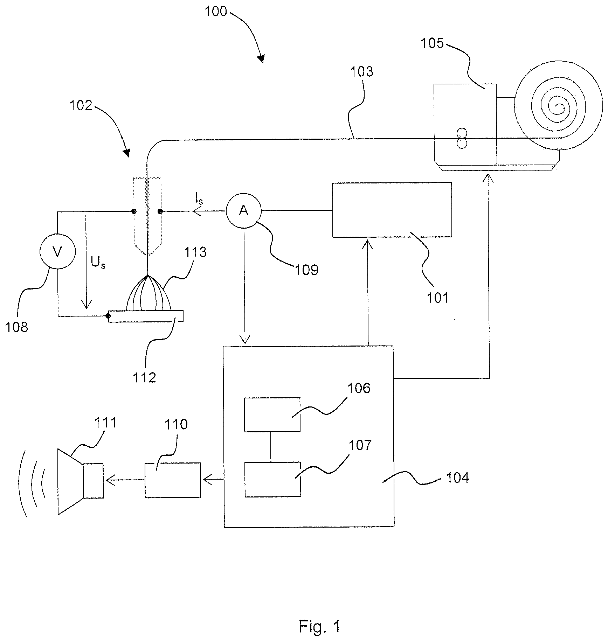

Fig. 1 zeigt eine schematische Darstellung eines Ausführungsbeispiels eines erfindungsgemäßen Lichtbogenschweißgeräts 100 gemäß dem ersten Aspekt der Erfindung in Form eines Blockschaltbilds.

Bei dem Lichtbogenschweißgerät 100 handelt es sich um ein MSG-Lichtbogenschweißgerät. Das Lichtbogenschweißgerät 100 umfasst einen Schweißbrenner 102. Zum Schweißen unter Schutzgas ist der Schweißbrenner 102 mit einer abschmelzenden Elektrode in Form eines Schweißdrahts 103 ausgestattet. Für den automatischen Drahtvorschub ist eine Drahtfördervorrichtung 105 vorgesehen. Der Schweißdraht 103 ist mittels eines versorgungsspannungsgespeisten Leistungsteils 101 mit Energie beaufschlagbar. Das Lichtbogenschweißgerät 100 umfasst weiterhin eine Lichtbogenprozesssteuereinheit 104. Diese beinhaltet einen Mikroprozessor 106 und einen Speicher 107. Der Mikroprozessor 106 und der Speicher 107 stehen miteinander in Verbindung.

Ferner umfasst das Lichtbogenschweißgerät 100 einen Spannungsmesser 108, mit dem die Lichtbogenspannung Uₛ, d.h. die Spannung zwischen der Spitze des Schweißdrahts 103 und einem Werkstück 112, zwischen denen der Lichtbogen 113 brennt, erfassbar ist. Zur Messung der Lichtbogenstromstärke Iₛ ist ein Strommesser 109 in den Stromkreis zwischen dem Leistungsteil 101 und dem Schweißbrenner 102 eingeschleift. Über einen Signalgenerator 110 kann ein Lautsprecher 111 angesteuert werden, so dass dieser einen Signalton abgibt. Alternativ könnte auch durch Modulation der Lichtbogenstromstärke der Lichtbogen selbst zur Schallerzeugung verwendet werden. Dazu könnte der Signalgenerator 110 eingerichtet sein, dem Lichtbogenstrom ein entsprechendes Signal zu überlagern. Auf den Lautsprecher 111 könnte dann verzichtet werden. Die Lichtbogenprozesssteuereinheit 104 ist mit dem Leistungsteil 101, der Drahtfördervorrichtung 105, dem Spannungsmesser 108, dem Strommesser 109 und dem Signalgenerator 110 verbunden.

Im Betrieb des Lichtbogenschweißgeräts 100 greift der Mikroprozessor 106 auf ein im Speicher 107 hinterlegtes Steuerprogramm zurück. Dieses umfasst unter anderem Instruktionen, die bewirken, dass die Lichtbogenprozesssteuereinheit 104 über den Mikroprozessor 106 Steuersignale an das Leistungsteil 101 ausgibt. In der Folge wird die Lichtbogenstromstärke Iₛ derart gesteuert, dass ein Pulsschweißprozess durchgeführt wird, wobei der Pulsschweißprozess zumindest eine Pulsstromphase, in der die Lichtbogenstromstärke Iₛ zumindest zeitweise oberhalb einer kritischen Stromstärke liegt, und eine Grundstromphase, in der die Lichtbogenstromstärke Iₛ bei einer Grundstromstärke liegt, umfasst. Über die Verbindung zu der Drahtfördervorrichtung 105 kann die Lichtbogenprozessteuereinheit 104 auch die Fördergeschwindigkeit des Schweißdrahts 103 steuern.

Zwar ist der Pulsschweißprozess an sich weitgehend kurzschlussfrei, vereinzelt können aber Kurzschlüsse auftreten. Bei dem Lichtbogenschweißgerät 100 äußert sich ein Kurschluss zwischen dem Schweißdraht 103 und dem Werkstück 112 in einem Einbruch der Lichtbogenspannung Uₛ. Dieser kann über den Spannungsmesser 108 erfasst werden. Die Lichtbogenprozesssteuereinheit 104 ist eingerichtet, eine Auswertung des Spannungsmesswerts vorzunehmen. Dazu enthält das Steuerprogramm im Speicher 107 entsprechende Verarbeitungsanweisungen. Danach wird das Vorliegen eines Kurzschlusses angenommen, wenn die Spannung Uₛ einen im Speicher 107 hinterlegten Schwellwert unterschreitet. Die Kurschlussdetektion kann alternativ auch mittels der Überwachung der Lichtbogenstromstärke Iₛ durch den Strommesser 109 erfolgen. Der Spannungsmesser 108 und der Strommesser 109 werden weiterhin für die Regelung der Lichtbogenstromstärke Iₛ und der Lichtbogenspannung Uₛ durch die Lichtbogenprozesssteuereinheit 104 benötigt.

Die Lichtbogenprozesssteuereinheit 104 ist eingerichtet, ein Steuersignal an den Signalgenerator 110 auszugeben, wenn während des Pulsschweißprozesses ein Kurzschluss detektiert wurde und diesem detektierten Kurzschluss während des Pulsschweißprozesses und relativ zu der Anzahl der bisher durchlaufenen Pulse des Pulsschweißprozesses eine festgelegte Anzahl von detektierten Kurzschlüssen vorangegangen ist.

Der Signalgenerator 110 reagiert darauf mit der Ausgabe eines elektrischen Signals zur Ansteuerung des Lautsprechers 111, so dass aus diesem ein Signalton ertönt. Auf diese Weise wird einem Bediener des Lichtbogenschweißgeräts 100 die Detektion eines Kurzschlusses akustisch angezeigt.

Wird das Lichtbogenschweißgerät 100 in Betrieb genommen und ein Pulsschweißvorgang durchgeführt, erfolgt die Anzeige eines detektierten Kurzschlusses entsprechend dem erfindungsgemäßen Verfahren.

Während des Pulsschweißprozesses ist das Auftreten einzelner Kurzschlüsse nahezu unvermeidbar. Da die Lichtbogenprozesssteuereinheit 104 eingerichtet ist, ein Steuersignal an den Signalgenerator 110 auszugeben, wenn während des Pulsschweißprozesses ein Kurzschluss detektiert wurde und diesem detektierten Kurzschluss während des Pulsschweißprozesses und relativ zu der Anzahl der bisher durchlaufenen Pulse des Pulsschweißprozesses eine festgelegte Anzahl von detektierten Kurzschlüssen vorangegangen ist, wird der Schweißer nicht beim jeden detektierten Kurzschluss über die Kurzschlussdetektion in Kenntnis gesetzt. Erst wenn Kurzschlüsse verstärkt auftreten, erfolgt die Signalausgabe. Bis dahin wird davon ausgegangen, dass es sich um vereinzelte Kurzschlüsse handelt, die nicht auf eine ungeeignete Parametrierung hindeuten.

Die Kurzschlussanzeige verschafft dem Bediener die Möglichkeit, entsprechend zu reagieren.Er kann dazu einen geeigneten Schweißprozessparameter verändern. Zum Beispiel kann er durch Erhöhen des Werts von zumindest einem der Parameter Lichtbogenstromstärke Iₛ und Lichtbogenspannung Uₛ den Energieeintrag in den Schweißdraht 103 steigern und so durch eine optimierte Parametrierung eine Vergrößerung der Lichtbogenlänge und damit eine Kurzschlussvermeidung bewirken. Eine weitere Möglichkeit hierzu besteht in der Verminderung der Drahtfördergeschwindigkeit. Die Parameterveränderung kann durch die Vornahme einer entsprechenden Einstellung an einem Bedienelement des Lichtbogenschweißgeräts 100 erfolgen.

Durch die Kurzschlussvermeidung treten im Mittel über eine Vielzahl von Pulsen Kurzschlüsse deutlich seltener auf, so dass auch weniger Kurzschlüsse aufgelöst werden. Dadurch kann die Anzahl der entstehenden Schadstoffpartikel, d.h. die Schweißrauchentwicklung, reduziert werden. Insbesondere erfolgt eine Reduktion der besonders schädlichen Partikel im Nano-Bereich.

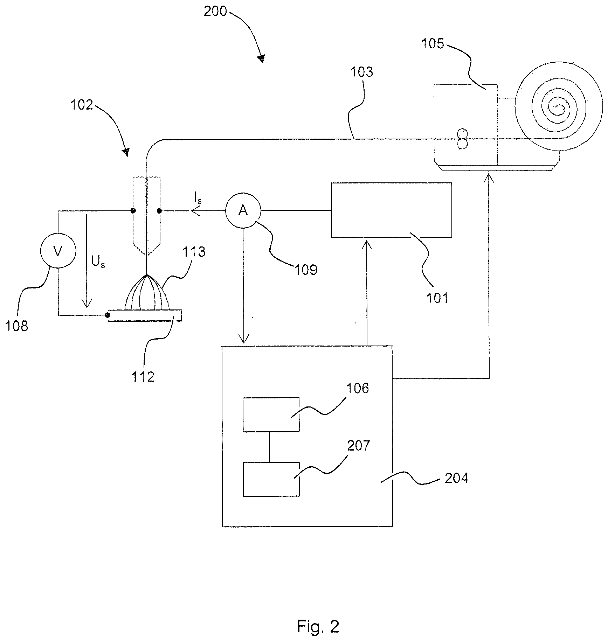

Fig. 2 zeigt eine schematische Darstellung eines Ausführungsbeispiels eines Lichtbogenschweißgeräts 200, das eine Lichtbogenprozesssteuereinheit 204 gemäß dem zweiten Aspekt der Erfindung umfasst, in Form eines Blockschaltbilds.

Die vorstehenden Erläuterungen bezüglich des Lichtbogenschweißgeräts 100 aus Fig. 1 gelten für das Lichtbogenschweißgerät 200 zum großen Teil ebenfalls. Gleiche Komponenten sind mit gleichen Bezugszeichen versehen. Nachfolgend wird nur auf Unterschiede zum Lichtbogenschweißgerät 100 aus Fig. 1 eingegangen.

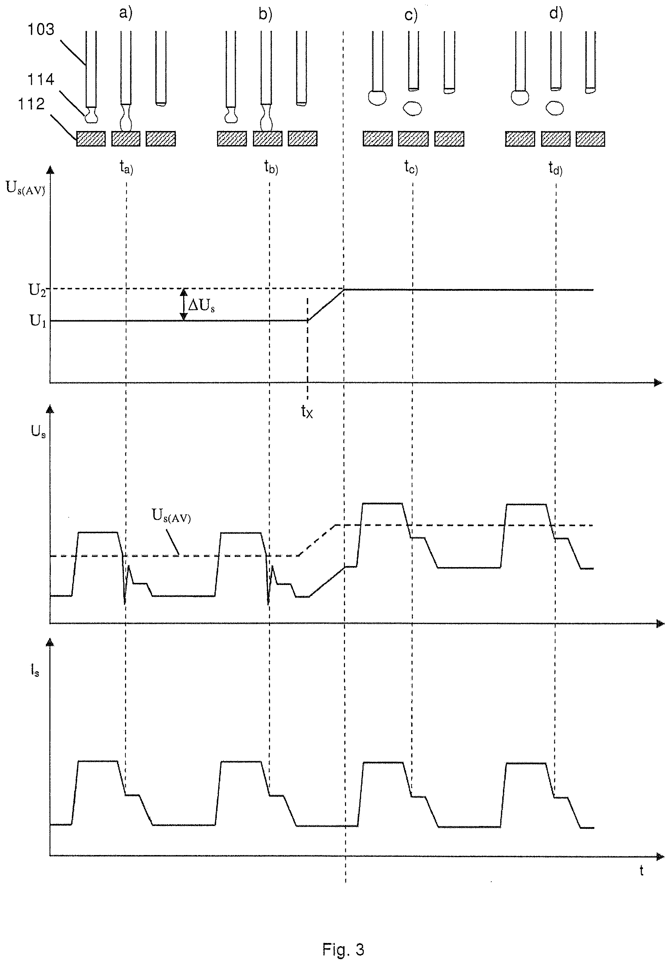

Das Lichtbogenschweißgerät 200 enthält keinen Signalgenerator und keinen Lautsprecher. Die Lichtbogenprozesssteuereinheit 204 ist prinzipiell genauso aufgebaut wie die Lichtbogenprozesssteuereinheit 104 aus Fig. 1. Sie enthält denselben Mikroprozessor 106 und auch der Speicher 207 ist vom selben Typ wie der Speicher 107. Das Steuerprogramm, welches in dem Speicher 207 hinterlegt ist, ist gegenüber dem Steuerprogramm welches in dem Speicher 107 hinterlegt ist, modifiziert. Es enthält Instruktionen, deren Ausführung zur Folge hat, dass bei der Detektion eines Kurzschlusses durch Beeinflussung eines Schweißprozessparameters eine Kurzschlussvermeidung bewirkt wird, wenn dem detektierten Kurzschluss während des Schweißprozesses in einem festgelegten Zeitraum eine festgelegte Anzahl von detektierten Kurzschlüssen vorangegangen ist. Die Lichtbogenprozessteuereinheit 204 ist eingerichtet, zur Kurzschlussvermeidung als Schweißprozessparameter die Lichtbogenspannung Uₛ zu beeinflussen. Wie dies im Detail abläuft wird nachstehend anhand von Fig. 3 erläutert.

Fig. 3 zeigt eine schematische Gegenüberstellung des zeitlichen Verlauf des Werkstoffübergangs, der mittleren Lichtbogenspannung U_{S(AV)}, der Lichtbogenspannung U_{S} sowie des Lichtbogenstroms I_{S}, wie sie sich bei dem Einsatz des Lichtbogenschweißgeräts 200 aus Fig. 2 oder auch bei dem Einsatz des Lichtbogenschweißgeräts 100 aus Fig. 1 ergeben kann.

Im obersten Teil von Fig. 3 ist zu sehen, wie der Werkstoffübergang vom Schweißdraht 103 zum Werkstück 112 erfolgt. Der Werkstoff geht jeweils als Werkstofftropfen 114 über. Fig. 3 zeigt vier Werkstoffübergänge, die mit a), b) c) und d) bezeichnet sind und entsprechend bezeichneten Impulsen zugeordnet sind. Es sind jeweils drei Phasen des Werkstoffübergangs gezeigt, nämlich der Schweißdraht 103 mit dem Werkstofftropfen 114 unmittelbar vor dessen Übergang, der Werkstofftropfen 114 beim Übergang und der Schweißdraht 103 direkt nach dem Übergang. Dabei erfolgt der Werkstoffübergang zu den Zeitpunkten tₐ₎ t_{b)}, t_{c)} bzw. t_{d)}. Wie Fig. 3 zu entnehmen ist, erfolgen die Werkstoffübergänge a) und b) im Kurschluss. Zum Zeitpunkt tₐ₎ ist der Werkstofftropfen 114 jeweils sowohl mit dem Schweißdraht 103 als auch mit dem Werkstück 112 in Kontakt. Die Lichtbogenspannung U_{S} bricht ein. Es entstehen hier also verstärkt schädliche Partikel im Nano-Bereich, wenn die Kurschlüsse aufgelöst werden.

Unterhalb der Darstellung des Werkstoffübergangs zeigt Fig. 3 den Verlauf der mittleren Lichtbogenspannung U_{S(AV)}, die den Spannungsmittelwert über den jeweiligen Impuls gemittelt darstellt. Der Verlauf des Spannungsmittelwerts kann beispielsweise von der Lichtbogenprozesssteuereinheit 104 oder der Lichtbogenprozesssteuereinheit 204, in der Regel nach Einstellung durch den Schweißer, vorgegeben werden. Indem der Verlauf der Lichtbogenspannung U_{S} vorgeben wird, wird automatisch auch der Verlauf der mittleren Lichtbogenspannung U_{S (AV)} vorgegeben. Zusammen mit dem Lichtbogenstrom I_{S} bestimmt die Lichtbogenspannung U_{S} den Energieeintrag in den Schweißdraht 103.

Mit dem Kurzschluss zum Zeitpunkt t_{b} ist die festgelegte Anzahl von Kurzschlüssen, die in Relation zu der Anzahl der während des Pulsschweißprozesses durchlaufenen Impulse auftreten darf, überschritten. Wenn der von dem Spannungsmesser 108 gelieferte Messwert der Lichtbogenspannung Uₛ durch das Auftreten des Kurzschlusses zum Zeitpunkt t_{b} eingebrochen und unter einen vorgegebenen Schwellwert gefallen ist und dies von der Lichtbogenprozesssteuereinheit 204 erkannt wurde, reagiert diese zum Zeitpunkt tₓ darauf, um zukünftige Kurzschlüsse zu vermeiden. Zu diesem Zweck addiert die Lichtbogenprozesssteuereinheit 204 auf den bisher vorgegebenen Verlauf der Lichtbogenspannung Uₛ einen Offsetwert ΔU_{S}. Anders ausgedrückt wird der Verlauf der Lichtbogenspannung Uₛ um den Wert ΔU_{S} angehoben. Folglich nimmt auch die mittleren Lichtbogenspannung U_{s (AV)} vom Wert U₁ um ΔU_{S} auf den Wert U₂ zu. Damit verbunden ist ein erhöhter Energieeintrag in den Schweißdraht 103. Dies äußert sich bei den Werkstoffübergängen c) und d) in im Vergleich zu den kurzschlussbehafteten Werkstoffübergängen a) und b) größeren Abstand zwischen der Spitze des Schweißdrahts 103 und der Oberfläche des Werkstücks 112. Damit verlängert sich der Lichtbogen. Der Übergang des Werkstofftropfens 114 erfolgt daher in den Fällen c) und d) kurzschlussfrei. Dabei wurde ΔU_{S} so gewählt, dass sich eine Lichtbogenlänge einstellt, die gerade groß genug ist, dass sich ein kurzschlussfreier Werkstoffübergang einstellt. Wegen der somit immer noch geringen Lichtbogenlänge können die diesbezüglichen Vorteile bei der Schweißqualität erhalten bleiben.

Die Erhöhung der mittleren Lichtbogenspannung U_{s (AV)} kann auch in mehreren Schritten erfolgen. So kann, anders als in Fig. 3 dargestellt, etwa zum Zeitpunkt tₓ eine Erhöhung um weniger als ΔU_{S}, beispielsweise um lediglich ΔU_{S}/10 erfolgen. Erfolgt dann der Werkstoffübergang c) dennoch im Kurzschluss, kann eine erneute Erhöhung um ΔU_{S}/10 vorgenommen werden. Die Lichtbogenprozesssteuereinheit 204 kann eingerichtet sein, die Schweißspannung Uₛ zu verändern, bis hinsichtlich des Auftretens von Kurzschlüssen ein vorgegebenes Qualitätskriterium eingehalten ist. Als Qualitätskriterium kann in dem Speicher 207 eine Impulsanzahl N hinterlegt sein. Zum Beispiel kann N = 3 gelten. Die Lichtbogenprozesssteuereinheit 204 kann eingerichtet sein, die Impulse zu zählen, die während eines Pulsschweißprozesses durchlaufen wurden, ohne dass währenddessen ein Kurzschluss detektiert wurde. Wird von dem Spannungsmesser 108 ein Spannungseinbruch gemessen, bevor N Impulse durchlaufen wurden, wird der Zähler zurückgesetzt. Der vorgegebene Verlauf der Lichtbogenspannung Uₛ kann dann in dem Speicher 107 hinterlegten Vorgaben folgend verändert werden, indem die Lichtbogenspannung Uₛ z.B. erneut um ΔU_{S}/10 angehoben wird. Nach einem Impuls ohne die Detektion eines Kurzschlusses, z.B. Impuls c) wird die Parameterveränderung ausgesetzt. Wird jedoch erneut ein Kurzschluss detektiert, bevor N Impulse durchlaufen wurden, wird die Parameterveränderung wieder fortgesetzt, d.h. es findet beispielsweise ein erneutes Anheben um ΔU_{S}/10 statt. Sind dagegen N = 3 Impulse durchlaufen wurden, ohne dass ein Kurzschluss detektiert wurde, erfolgt endgültig keine Veränderung der Lichtbogenspannung Uₛ mehr. Auf diese Weise wird eine iterative Parameteroptimierung ausgeführt, die eine sukzessive Verbesserung der Parametrierung des Schweißprozesses bewirkt und Kurzschlüsse vermeidet. So kann auch die zuvor angesprochene, für die Vermeidung von Kurzschlüssen gerade ausreichende Verlängerung des Lichtbogens erreicht werden.

Das Anheben des Verlaufs der Lichtbogenspannung U_{S} um den Wert ΔU_{S} zum Zweck der Kurzschlussvermeidung muss nicht automatisch erfolgen. Es kann auch durch den Schweißer aktiv eingeleitet werden. Dazu kann der Schweißer beispielsweise bei dem Lichtbogenschweißgerät 100 gemäß dem Ausführungsbeispiel entsprechend dem ersten Aspekt der Erfindung aus Fig. 1 durch den bei Detektion eines Kurzschlusses vom Lautsprecher 111 abgegebenen Signalton auf den Kurzschluss aufmerksam gemacht werden. Er kann als Reaktion hierauf die entsprechende Einstellung manuell vornehmen.

Wird das Lichtbogenschweißgerät 200 in Betrieb genommen und ein Pulsschweißvorgang durchgeführt, wird bei der Detektion eines Kurzschlusses durch Beeinflussung eines Schweißprozessparameters eine Kurzschlussvermeidung entsprechend dem Verfahren gemäß dem zweiten Aspekt der Erfindung bewirkt.

Die Kurzschlussvermeidung hat den Effekt, dass die Anzahl der entstehenden Schadstoffpartikel, d.h. die Schweißrauchentwicklung, reduziert wird. Insbesondere erfolgt eine Reduktion der besonders schädlichen Partikel im Nano-Bereich.

Es kann ein der Lichtbogenprozesssteuereinheit 204 zugeordnetes Bedienmittel, z.B. eine Taste, vorgesehen sein, mit der ein Bediener das Verhalten der Lichtbogenprozesssteuereinheit, bei der Detektion eines Kurzschlusses durch Beeinflussung eines Schweißprozessparameters eine Kurzschlussvermeidung zu bewirken, aus- bzw. wieder zuschalten kann. Eine solche Ausschaltmöglichkeit dieser Option könnte von Schweißern, die fordern, dass während der Arbeit mit dem Lichtbogenschweißgerät 200 die von ihnen eingestellte Parametrierung stets beibehalten wird, gewünscht werden.

Da bei dem erläuterten Ausführungsbeispiel gemäß dem zweiten Aspekt der Erfindung auf dem Weg der Einflussnahme auf Schweißprozessparameter durch die Lichtbogenprozesssteuereinheit 204 eine Kurzschlussvermeidung herbeigeführt wird, erfolgt die Schweißrauchreduzierung hier automatisch. Ein Zutun des Bedieners des Lichtbogenschweißgeräts 200 ist anders als beim Lichtbogenschweißgerät 100 aus Fig. 1 nicht notwendig. Es sei allerdings angemerkt, dass auch bei dem Lichtbogenschweißgerät 200 eine Anzeige eines detektierten Kurzschlusses für den Bediener erfolgen kann, wenn dazu entsprechende Anzeigemittel - z.B. ein Signalgenerator und ein Lautsprecher - vorgesehen werden.

## Patentansprüche

1. Lichtbogenschweißgerät (100) mit einer abschmelzenden Elektrode (103), wobei das Lichtbogenschweißgerät (100) Kurzschlussdetektionsmittel (108) umfasst, und das Lichtbogenschweißgerät eingerichtet ist, einen Pulsschweißprozess durchzuführen, **dadurch gekennzeichnet**, und dass das Lichtbogenschweißgerät (100) Anzeigemittel (110, 111) umfasst, die eingerichtet sind, einen von den Kurzschlussdetektionsmitteln (108) detektierten Kurzschluss anzuzeigen, wobei die Anzeigemittel(110, 111) eingerichtet sind, einen von den Kurzschlussdetektionsmitteln (108) detektierten Kurzschluss nur anzuzeigen, wenn dem detektierten Kurzschluss während des durchgeführten Schweißprozesses eine festgelegte Anzahl von detektierten Kurzschlüssen vorangegangen ist.

2. Lichtbogenschweißgerät (100) nach Anspruch 1, **dadurch gekennzeichnet, dass** die Anzeigemittel (110, 111) eingerichtet sind, einen detektierten Kurzschluss akustisch anzuzeigen.

3. Lichtbogenschweißgerät (100) nach Anspruch 2, **dadurch gekennzeichnet, dass** zur akustischen Anzeige eines detektierten Kurzschlusses die Lichtbogenstromstärke (I_{S}) moduliert wird.

4. Lichtbogenschweißgerät (100) nach Anspruch 1, **dadurch gekennzeichnet, dass** die Anzeigemittel eingerichtet sind, einen detektierten Kurzschluss taktil anzuzeigen.

5. Verfahren zum Schweißen mit einem Lichtbogenschweißgerät (100) mit einer abschmelzenden Elektrode (103), bei dem ein Kurzschluss detektiert wird, wobei das Lichtbogenschweißgerät im Pulsschweißprozess betrieben wird und **dadurch gekennzeichnet, dass** der detektierte Kurzschluss angezeigt wird, wobei ein detektierter Kurzschluss nur angezeigt wird, wenn dem detektierten Kurzschluss während des durchgeführten Schweißprozesses eine festgelegte Anzahl von detektierten Kurzschlüssen vorangegangen ist.

6. Lichtbogenprozesssteuereinheit (204) für ein Lichtbogenschweißgerät (200) mit einer abschmelzenden Elektrode (103), wobei die Lichtbogenprozesssteuereinheit (204) eingerichtet ist, die Lichtbogenstromstärke (I_{S}) dahingehend zu steuern, dass ein Pulsschweißprozess durchgeführt wird, wobei der Lichtbogenprozesssteuereinheit (204) Kurzschlussdetektionsmittel (108) zugeordnet sind, und wobei die Lichtbogenprozesssteuereinheit (204) eingerichtet ist, bei der Detektion eines Kurzschlusses durch die Kurzschlussdetektionsmittel (108) durch Beeinflussung eines Schweißprozessparameters (U_{S}, I_{S}) eine Kurzschlussvermeidung zu bewirken, **dadurch gekennzeichnet, dass** die Lichtbogenprozesssteuereinheit (204) eingerichtet ist, bei der Detektion eines Kurzschlusses durch die Kurzschlussdetektionsmittel (108) durch Beeinflussung eines Schweißprozessparameters (U_{S}, I_{S}) eine Kurzschlussvermeidung nur zu bewirken, wenn dem detektierten Kurzschluss während des Pulsschweißprozesses eine festgelegte Anzahl von detektierten Kurzschlüssen vorangegangen ist.

7. Lichtbogenprozesssteuereinheit (204) nach Anspruch 6,
**dadurch gekennzeichnet, dass** die Lichtbogenprozesssteuereinheit (204) eingerichtet ist, eine Kurzschlussvermeidung nur zu bewirken, wenn dem detektierten Kurzschluss während des Schweißprozesses eine festgelegte Anzahl von detektierten Kurzschlüssen in einem festgelegten Zeitraum vorangegangen ist.

8. Lichtbogenprozesssteuereinheit (204) nach Anspruch 6 oder 7, **dadurch gekennzeichnet, dass** die Beeinflussung eines Schweißprozessparameters eine Erhöhung der Lichtbogenspannung (U_{S}) und/oder der Lichtbogenstromstärke (I_{S}) umfasst.

9. Lichtbogenprozesssteuereinheit (204) nach einem der Ansprüche 6 bis 8, **dadurch gekennzeichnet, dass** die Beeinflussung eines Schweißprozessparameters eine Verminderung einer Fördergeschwindigkeit der abschmelzenden Elektrode (103) umfasst.

10. Lichtbogenprozesssteuereinheit (204) nach einem der Ansprüche 6 bis 9, **dadurch gekennzeichnet, dass** ein der Lichtbogenprozesssteuereinheit (204) zugeordnetes Bedienmittel vorgesehen ist, mittels dessen das Verhalten der Lichtbogenprozesssteuereinheit (204), bei der Detektion eines Kurzschlusses durch die Kurzschlussdetektionsmittel (108) durch Beeinflussung eines Schweißprozessparameters (U_{S}, I_{S}) eine Kurzschlussvermeidung zu bewirken, aus- bzw. wieder zuschaltbar ist.

11. Lichtbogenprozesssteuereinheit (204) nach einem der Ansprüche 6 bis 10, **dadurch gekennzeichnet, dass** die Lichtbogenprozesssteuereinheit (204) eingerichtet ist, den Schweißprozessparameter (U_{S}, I_{S}) zu verändern, bis hinsichtlich des Auftretens von Kurzschlüssen ein vorgegebenes Qualitätskriterium eingehalten ist.

12. Verfahren zum Pulsschweißen mit einem Lichtbogenschweißgerät (200) mit einer abschmelzenden Elektrode (103), bei dem ein Kurzschluss detektiert wird und bei der Detektion eines Kurzschlusses durch Beeinflussung eines Schweißprozessparameters (U_{S}, I_{S}) eine Kurzschlussvermeidung bewirkt wird, **dadurch gekennzeichnet, dass**
bei der Detektion eines Kurzschlusses durch Beeinflussung eines Schweißprozessparameters (U_{S}, I_{S}) eine Kurzschlussvermeidung nur bewirkt wird, wenn dem detektierten Kurzschluss während des Pulsschweißprozesses eine festgelegte Anzahl von detektierten Kurzschlüssen vorangegangen ist.

## Claims

1. Arc welding device (100) having a melting electrode (103), wherein the arc welding device (100) comprises short circuit detection means (108) and wherein the arc welding device (100) is configured to carry out a pulsed arc welding process, **characterized in that** the arc welding device (100) comprises indication means (110, 111) that are configured to indicate a short circuit detected by the short circuit detection means (108), wherein the indication means (110, 111) are configured to only indicate a short circuit detected by the short circuit detection means (108) if a set number of detected short circuits has preceded the detected short circuit during the welding process being executed.

2. Arc welding device (100) according to claim 1, **characterised in that** the indication means (110, 111) are configured to indicate a detected short circuit acoustically.

3. Arc welding device (100) according to claim 2, **characterised in that** for the acoustic identifying of a detected short circuit, the arc amperage (Is) is modulated.

4. Arc welding device (100) according to claim 1, **characterised in that** the indicating means are configured to identify a detected short circuit tactilely.

5. Method for welding with an arc welding device (100) having a melting electrode (103) in which a short circuit is detected, wherein the arc welding device is operated in the pulsed arc welding process and **characterized in that** the detected short circuit is indicated, wherein a detected short circuit is indicated only if a set number of detected short circuits has preceded the detected short circuit during the welding process being executed.

6. Electric arc process control unit (204) for an arc welding device (200) having a melting electrode (103), wherein the electric arc process control unit (204) is configured to control the arc amperage (Is) so that a pulsed arc welding process is executed, wherein short circuit detection means (108) are assigned to the electric arc process control unit (204) and wherein the electric arc process control unit (204) is configured to cause a short circuit prevention on detection of a short circuit by the short circuit detection means (108) by influencing a welding process parameter (U_{S}, I_{S}), **characterised in that** the electric arc process control unit (204) is configured to only cause a short circuit prevention on detection of a short circuit by the short circuit detection means (108) by influencing a welding process parameter (U_{S}, I_{S}) if a set number of detected short circuits has preceded the detected short circuit during the pulsed-arc welding process.

7. Electric arc process control unit (204) according to claim 6, **characterised in that** the electric arc process control unit (204) is configured to only cause a short circuit prevention, if a set number of detected short circuits has preceded the detected short circuit within a set period of time during the welding process.

8. Electric arc process control unit (204) according to claim 6 or claim 7, **characterised in that** the influencing of a welding process parameter comprises the increase of the arc voltage (Us) and/or the arc amperage (Is).

9. Electric arc process control unit (204) according to any one of claims 6 to 8, **characterised in that** the influencing of a welding process parameter comprises the reduction of a conveying speed of the melting electrode (103).

10. Electric arc process control unit (204) according to any one of claims 6 to 9, **characterised in that** an operating unit assigned to the electric arc process control unit (204) is provided, by means of which the behaviour of the electric arc process control unit (204) to cause a short circuit prevention by influencing a welding process parameter (U_{S}, I_{S}) on detection of a short circuit by the short circuit detection means (108) can be deactivated or reactivated.

11. Electric arc process control unit (204) according to any one of claims 6 to 10, **characterised in that** the electric arc process control unit (204) is configured to modify the welding process parameter (U_{S}, I_{S}) until a set quality criterion regarding the occurrence of short circuits is complied.

12. Method for pulsed arc welding with an arc welding device (200) having a melting electrode (103) in which a short circuit is detected and in which a short circuit prevention by influencing a welding process parameter (U_{S}, I_{S}) is caused on detection of a short circuit, **characterised in that**, on detection of a short circuit, a short circuit prevention by influencing a welding process parameter (U_{S}, I_{S}) is only caused if a set number of detected short circuits has preceded the detected short circuit during the pulsed-arc welding process.

## Revendications

1. Appareil de soudure à l'arc (100) avec une électrode fusible (103), l'appareil de soudure à l'arc (100) comprenant des moyens de détection de courts-circuits (108), et l'appareil de soudure à l'arc étant conçu pour effectuer un procédé de soudure puisée,
**caractérisé en ce que** l'appareil de soudure à l'arc (100) comprend des moyens indicateurs (110, 111) conçus pour indiquer un court-circuit détecté par les moyens de détection de courts-circuits (108), les moyens indicateurs (110, 111) étant conçus pour n'indiquer un court-circuit détecté par les moyens de détection de courts-circuits (108) que si, pendant le procédé de soudure effectué, un nombre déterminé de courts-circuits détectés a précédé le court-circuit détecté.

2. Appareil de soudure à l'arc (100) selon la revendication 1, **caractérisé en ce que** les moyens indicateurs (110, 111) sont conçus pour indiquer acoustiquement un court-circuit détecté.

3. Appareil de soudure à l'arc (100) selon la revendication 2, **caractérisé en ce que** l'intensité de courant de l'arc électrique (I_{S}) est modulée pour indiquer acoustiquement un court-circuit détecté.

4. Appareil de soudure à l'arc (100) selon la revendication 1, **caractérisé en ce que** les moyens indicateurs sont conçus pour indiquer tactilement un court-circuit détecté.

5. Procédé de soudure avec un appareil de soudure à l'arc (100) avec une électrode fusible (103), où un court-circuit est détecté, l'appareil de soudure à l'arc étant utilisé dans le procédé de soudure pulsée et **caractérisé en ce que** le court-circuit détecté est indiqué, un court-circuit détecté n'étant indiqué que si, pendant le procédé de soudure effectué, un nombre déterminé de courts-circuits détectés a précédé le court-circuit détecté.

6. Unité de commande de procédé de soudure à l'arc (204) pour un appareil de soudure à l'arc (200) avec une électrode fusible (103), l'unité de commande de procédé de soudure à l'arc (204) étant conçue pour commander l'intensité de courant de l'arc électrique (I_{S}) de façon à effectuer un procédé de soudure pulsée, des moyens de détection de courts-circuits (108) étant attribués à l'unité de commande de procédé de soudure à l'arc (204), et l'unité de commande de procédé de soudure à l'arc (204) étant conçue pour susciter une prévention de court-circuit en influençant un paramètre de procédé de soudure (U_{S}, I_{S}) lors de la détection d'un court-circuit par les moyens de détection de courts-circuits (108), **caractérisée en ce que** l'unité de commande de procédé de soudure à l'arc (204) est conçue pour ne susciter une prévention de court-circuit lors de la détection d'un court-circuit par les moyens de détection de courts-circuits (108) en influençant un paramètre de procédé de soudure (U_{S}, I_{S}) que si, pendant le procédé de soudure effectué, un nombre déterminé de courts-circuits détectés a précédé le court-circuit détecté.

7. Unité de commande de procédé de soudure à l'arc (204) selon la revendication 6, **caractérisée en ce que** l'unité de commande de procédé de soudure à l'arc (204) est conçue pour ne susciter une prévention de court-circuit que si, pendant le procédé de soudure, un nombre déterminé de courts-circuits détectés pendant une période de temps déterminée a précédé le court-circuit détecté.

8. Unité de commande de procédé de soudure à l'arc (204) selon la revendication 6 ou 7, **caractérisée en ce que** l'influence d'un paramètre de procédé de soudure comprend une augmentation de la tension d'arc (Us) et/ou de l'intensité de courant d'arc (I_{S}).

9. Unité de commande de procédé de soudure à l'arc (204) selon l'une quelconque des revendications 6 à 8, **caractérisée en ce que** l'influence d'un paramètre de procédé de soudure comprend une réduction d'une vitesse de déplacement de l'électrode fusible (103).

10. Unité de commande de procédé de soudure à l'arc (204) selon l'une quelconque des revendications 6 à 9, **caractérisée en ce qu'**il est prévu un moyen de commande associé à l'unité de commande de procédé de soudure à l'arc (204), au moyen duquel il est possible d'éteindre et de rallumer l'action de l'unité de commande de procédé de soudure à l'arc (204) de susciter une prévention de court-circuit en influençant un paramètre de procédé de soudure (U_{S}, I_{S}) lors de la détection d'un court-circuit par les moyens de détection de courts-circuits (108).

11. Unité de commande de procédé de soudure à l'arc (204) selon l'une quelconque des revendications 6 à 10, **caractérisée en ce que** l'unité de commande de procédé de soudure à l'arc (204) est conçue pour modifier le paramètre de procédé de soudure (U_{S}, I_{S}) jusqu'à ce qu'un critère de qualité prédéfini soit respecté relativement à la survenue de courts-circuits.

12. Procédé de soudure puisée avec un appareil de soudure à l'arc (200) avec une électrode fusible (103), dans lequel un court-circuit est détecté et, lors de la détection d'un court-circuit, une prévention de court-circuit en influençant un paramètre de procédé de soudure (U_{S}, I_{S}) est suscité,
**caractérisé en ce que**, lors de la détection d'un court-circuit une prévention de court-circuit en influençant un paramètre de procédé de soudure (U_{S}, I_{S}) n'est suscité que si, pendant le procédé de soudure puisée, un nombre déterminé de courts-circuits détectés a précédé le court-circuit détecté.
